# EUROPÄISCHE PATENTSCHRIFT

(11) **EP 1 124 075 B1**
(45) Veröffentlichungstag und Bekanntmachung des Hinweises auf die Patenterteilung: **30.03.2005**
(21) Anmeldenummer: 01100317.5
(22) Anmeldetag: 04.01.2001
(51) Int. Cl.: F16F 1/362

(54) **Antriebsstrang für Kraftfahrzeuge**
Drive train for motor vehicles
Train d'entraînement pour véhicules automobiles

(30) Priorität: 12.02.2000 DE 10006268
(43) Veröffentlichungstag der Anmeldung: 16.08.2001
(73) Patentinhaber: Bayerische Motoren Werke Aktiengesellschaft, 80809 München (DE)
(72) Erfinder: Kröger, Werner, 85764 Oberschleissheim (DE); Letzer, Michael, 85567 Grafing (DE)

(56) Entgegenhaltungen:
- CH-A- 392 279
- DE-A- 3 024 413
- DE-A- 3 606 707
- DE-A- 4 420 934
- DE-A- 19 622 707
- FR-A- 2 631 046
- GB-A- 1 043 758

## Beschreibung

Die vorliegende Erfindung betrifft einen Antriebsstrang gemäß dem Oberbegriff des Patentanspruches 1.

Es ist bereits bekannt, einen Drehmomentwandler unter Zwischenschaltung eines Torsionsschwingungsdämpfers mit einer Kurbelwelle zu verbinden. Die DE 36 06 707 A1, welche als nächstliegender Stand der technik angesehen wird, beschreibt eine solche Anordnung, die jedoch kompliziert aufgebaut ist und deren Montage aufwendig ist.

Aus der CH 302 279 A1 ist eine Kupplungsscheibe für Fahrzeugkupplungen bekannt, bei der eine aus einem Drahtgewebekissen bestehende Dämpfungseinrichtung zur Dämpfung von Torsionsschwingungen vorgehen ist.

Aufgabe der Erfindung ist es, eine lösbare Verbindung zwischen einem Drehmomentwandler und einer Kurbelwelle unter Zwischenschaltung eines Torsionsschwingungsdämpfers bereit zu stellen, die einfach aufgebaut und einfach montiert werden kann.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Wenn der Kraftfluß im Torsionsschwingungsdämpfer wenigstens teilweise durch ein Gewebe und/oder ein Gewirk und/oder ein Gestrick und/oder ein Geflecht übertragen wird, das wenigstens teilweise aus Metall besteht und zur Schwingungsdämpfung beiträgt, hat das den Vorteil, daß der Torsionsschwingungsdämpfer einfach aufgebaut ist und einfach an den Drehmomentwandler und an die Kurbelwelle montiert werden kann.

Bevorzugte Ausführungen der Erfindung sehen vor, daß der Torsionsschwingungsdämpfer eingangsseitig an die Kurbelwelle und ausgangsseitig an den Drehmomentwandler über Schraub- und/oder Steckverbindungen angebracht ist. Dabei kann die Verbindung zwischen Kurbelwelle und Torsionsschwingungsdämpfer als Schraubverbindung und die Verbindung zwischen Torsionsschwingungsdämpfer und Drehmomentwandler als Steckverbindung ausgebildet sein, wobei die Schrauben und/oder Steckelemente an dem Torsionsschwingungsdämpfer in dem Gewebe und/oder Gewirk und/oder Gestrick und/oder Geflecht angebrachte Buchsen und/oder in dichter ausgeführte Bereiche des Gewebes und/oder Gewirks und/oder Gestricks und/oder Geflechts eingesetzt sein können.

Das hat den Vorteil, daß die drehmomentübertragenden Verbindungen im Torsionsschwingungsdämpfer aus sehr wenigen Teilen bestehen, die mit geringem Montageaufwand zusammengebaut werden können. Torsionsschwingungsdämpfer und Drehmomentwandler brauchen in axialer Richtung nur so zusammengeschoben werden, daß die Steckelemente der Steckverbindung ineinander ragen.

Weitere bevorzugte Ausführungen der Erfindung sehen vor, daß die Elemente der Steckverbindung gerade oder kegelig ausgebildet sind. Das hat den Vorteil, daß eine noch einfachere und sicherere Montage gewährleistet ist, da beim Zusammenschieben von Torsionsschwingungsdämpfer und Drehmomentwandler Selbstzentrierung stattfindet.

Wenn das Gewebe und/oder Gewirk und/oder Gestrick und/oder Geflecht aus Metalldrähten besteht, zwischen die unter Umständen auch noch elastomeres Material eingebracht ist, hat das den Vorteil, daß die schwingungstechnischen Eigenschaften auf einfache Weise gezielt beeinflußt werden können.

Ein bevorzugtes Ausführungsbeispiel der Erfindung beschreibt die nachfolgende Beschreibung mit der zugehörigen Zeichnung.

### Beispiele

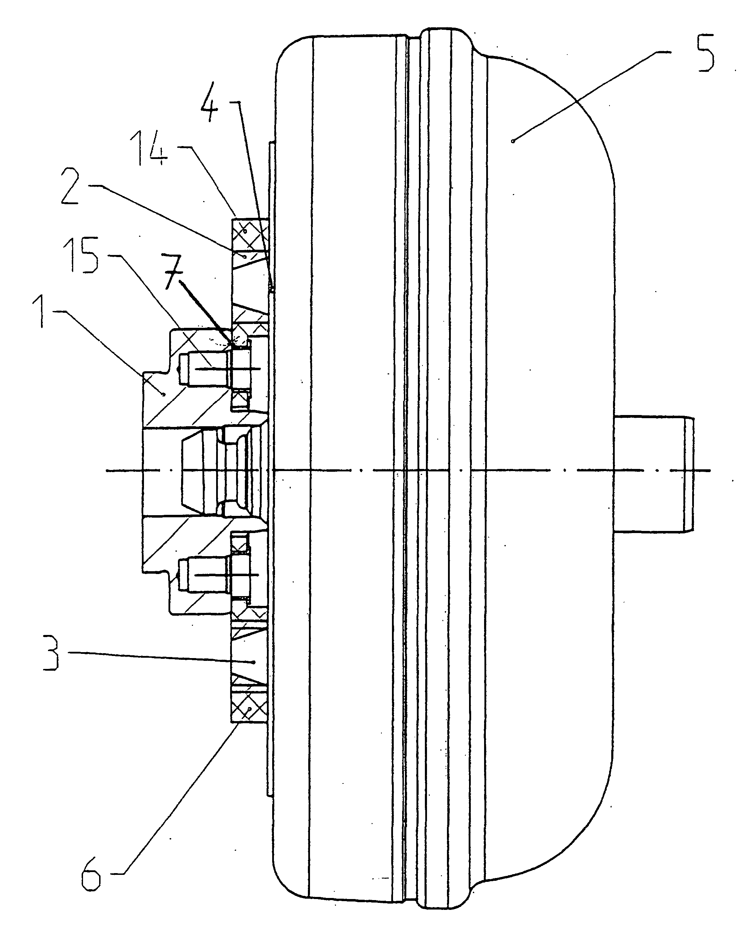

Die einzige Figur zeigt die Anbindung einer Kurbelwelle an einen hydrodynamischen Drehmomentwandler unter Zwischenschaltung eines Torsionsschwingungsdämpfers gemäß der Erfindung in einem Teilschnitt.

An einem Endabschnitt einer Kurbelwelle 1, ist nur durch eine Linie angedeutet gezeichnete Schrauben 15 ein Torsionsschwingungsdämpfer 14 angebracht. Dieser ist zu seiner Verbindung mit einem hydrodynamischen Drehmomentwandler 5 an seinem Außenumfang mit Buchsen 2 für eine Steckverbindung versehen, die kegelig ausgebildet sind. Die mit diesen Buchsen 2 korrespondierenden Stifte 3 sind an einem Außenumfang 4 eines Gehäuses des hydrodynamischen Drehmomentwandlers 5 angebracht, so daß zur Herstellung der drehmomentübertragenden Verbindung zwischen dem Drehmomentwandler 5 und dem Torsionsschwingungsdämpfer 14 ein nicht gezeichnetes Getriebe mit dem vorher daran befestigten Drehmomentwandler 5 bei der Montage in Richtung Kurbelwelle 1 verschoben wird.

Im Torsionsschwingungsdämpfer 14 wird der Kraftfluß, von der Kurbelwelle 1 auf den Drehmomentwandler 5, durch ein Metallgestrick 6 aus Metalldrähten übertragen, das so angeordnet ist, daß es zur Schwingungsdämpfung beiträgt. Die eingangsseitig drehmomentübertragenden Verbindungen, die Schrauben 15, sind über im Metallgestrick 6 angebrachte weitere Buchsen 7 eingesetzt, ähnlich wie die ausgangsseitig drehmomentübertragenden Verbindungen, die Stifte 3 über die Buchsen 2.

Zwischen die Metalldrähte des Metallgestricks 6 kann Gummi eingebracht sein.

## Patentansprüche

1. Antriebsstrang für Kraftfahrzeuge, mit
einem Torsionsschwingungsdämpfer (14), der zwischen einer Kurbelwelle (1) und einem gleichachsig zur Kurbelwelle (1) angeordneten hydrodynamischen Drehmomentwandler (5) angeordnet ist, wobei der Torsionsschwingungsdämpfer (14) über eine eingangsseitige Verbindung mit der Kurbelwelle (1) und über eine ausgangsseitige Verbindung mit dem hydrodynamischen Drehmomentwandler (5) verbunden ist,
**dadurch gekennzeichnet, dass**
der Torsionsschwingungsdämpfer (14) ein kraftübertragendes Element aufweist, das zumindest teilweise aus einem Gewebe und/oder einem Gewirk und/oder einem Gestrick und/oder einem Geflecht aus Metalldrähten und das so angeordnet ist, daß es zur Schwingungsdämpfung beiträgt und
dass zumindest die eingangsseitige Verbindung oder die ausgangsseitige Verbindung eine lösbare Steckverbindung ist.

2. Antriebsstrang nach Anspruch 1 oder 2, **dadurch gekennzeichnet, daß** der Torsionsschwingungsdämpfer (14) über eine Schraubverbindung eingangsseitig mit der Kurbelwelle (1) oder ausgangsseitig mit dem Drehmomentwandler (5) verbunden ist.

3. Antriebsstrang nach einem der Ansprüche 1 bis 3, **dadurch gekennzeichnet, daß** die Verbindung zwischen der Kurbelwelle (1) und dem Torsionsschwingungsdämpfer (14) als Schraubverbindung und die Verbindung zwischen dem Torsionsschwingungsdämpfer (14) und dem Drehmomentwandler (5) als Steckverbindung ausgebildet ist.

4. Antriebsstrang nach einem der Ansprüche 3 oder 4, **dadurch gekennzeichnet, daß** Schrauben (15) der Schraubverbindung in zugeordnete Buchsen (2, 7) eingesetzt sind, wobei die Buchsen (2, 7) in dem Gewebe und/oder Gewirk und/oder Gestrick und/oder Geflecht angeordnet sind.

5. Antriebsstrang nach einem der Ansprüche 3 oder 4, **dadurch gekennzeichnet, daß** Elemente der Steckverbindung in zugeordnete Buchsen (2, 7) eingesetzt sind, wobei die Buchsen (2, 7) in dem Gewebe und/oder Gewirk und/oder Gestrick und/oder Geflecht angeordnet sind.

6. Antriebsstrang nach Anspruch 5, **dadurch gekennzeichnet, dass** die Buchsen (2,7) in Bereichen des Gewebes und/oder Gewirks und/oder Gestricks und/oder Geflechts angeordnet sind, die dichter als andere Bereiche des Gewebes und/oder Gewirks und/oder Gestricks und/oder Geflechts ausgeführt sind.

7. Antriebsstrang nach Anspruch 5, **dadurch gekennzeichnet, daß** die Elemente der Steckverbindung gerade ausgebildet sind.

8. Antriebsstrang nach Anspruch 5, **dadurch gekennzeichnet, daß** die Elemente der Steckverbindung kegelig ausgebildet sind.

9. Antriebsstrang nach einem der Ansprüche 1 bis 5, **dadurch gekennzeichnet, daß** zwischen die Metalldrähte des Gewebes und/oder Gewirks und/oder Gestricks und/oder Geflechts ein elastomeres Material eingebracht ist.

## Claims

1. A drive train for motor vehicles, comprising a torsional vibration damper (14), which is arranged between a crankshaft (1) and a hydrodynamic torque converter (5) arranged coaxially with respect to the crankshaft (1), wherein the torsional vibration damper (14) is connected to the crankshaft (1) via a connection on the input side and to the hydrodynamic torque converter (5) via a connection on the output side, **characterised in that** the torsional vibration damper (14) has a force-transmitting element which is at least partially made of a woven and/or knitted or platted fabric made of metal wires and which is arranged such that it contributes to the vibration damping and **in that** at least the connection on the input side or the connection on the output side is a releasable plug-type connection.

2. A drive train according to claim 1 or claim 2, **characterised in that** the torsional vibration damper (14) is connected to the crankshaft (1) via a screw connection on the input side or to the torque converter (5) on the output side.

3. A drive train according to any one of claims 1 to 3, **characterised in that** the connection between the crankshaft (1) and the torsional vibration damper (14) is constructed as a screw connection and the connection between the torsional vibration damper (14) and the torque converter (5) is constructed as a plug-type connection.

4. A drive train according to either claim 3 or claim 4, **characterised in that** screws (15) of the screw connection are inserted into associated bushes (2, 7), wherein the bushes (2, 7) are arranged in the woven and/or knitted and/or plaited fabric.

5. A drive train according to either claim 3 or claim 4, **characterised in that** elements of the plug-type connection are inserted in associated bushes (2, 7), wherein the bushes (2, 7) are arranged in the woven and/or knitted and/or plaited fabric.

6. A drive train according to claim 5, **characterised in that** the bushes (2, 7) are arranged in regions of the woven and/or knitted and/or plaited fabric which are denser in design than other regions of the woven and/or knitted and/or plaited fabric.

7. A drive train according to claim 5, **characterised in that** the elements of the plug-type connection are straight in design.

8. A drive train according to claim 5, **characterised in that** the elements of the plug-type connection are conical in design.

9. A drive train according to any one of claims 1 to 5, **characterised in that** an elastomeric material is introduced between the metal wires of the woven and/or knitted and/or plaited fabric.

## Revendications

1. Ligne de transmission pour véhicules automobiles comportant
un amortisseur de vibrations de torsion (14) entre un vilebrequin (1) et un convertisseur de couple hydrodynamique (5) disposé sur le même axe que le vilebrequin (1), l'amortisseur de vibrations de torsion (14) étant raccordé au vilebrequin (1) par une liaison d'entrée et au convertisseur de couple hydrodynamique (5) par une liaison de sortie,
**caractérisée en ce que**
l'amortisseur de vibrations de torsion (14) présente un élément permettant le transfert de forces qui se compose au moins partiellement d'un matériau tissé et/ou tricoté et/ou tressé en fils métalliques et qui est disposé de telle manière qu'il contribue à l'amortissement des vibrations, et
au moins la liaison d'entrée ou la liaison de sortie consiste en une liaison enfichable.

2. Ligne de transmission suivant la revendication 1 ou 2,
**caractérisée en ce que**
l'amortisseur de vibrations de torsion (14) est raccordé par une liaison vissée au vilebrequin (1) du côté entrée ou au convertisseur de couple (5) du côté sortie.

3. Ligne de transmission suivant les revendications 1 à 3,
**caractérisée en ce que**
la liaison entre le vilebrequin (1) et l'amortisseur de vibrations de torsion (14) est une liaison vissée, et celle entre l'amortisseur de vibrations de torsion (14) et le convertisseur de couple (5) est une liaison par enfichage.

4. Ligne de transmission suivant la revendication 3 ou 4,
**caractérisée en ce que**
des vis (15) de la liaison vissée sont mises en place dans des manchons (2, 7) associés, ces manchons (2, 7) étant disposés dans le matériau tissé et/ou tricoté et/ou tressé.

5. Ligne de transmission suivant la revendication 3 ou 4,
**caractérisée en ce que**
les éléments de la liaison à fiches sont mis en place dans des manchons (2, 7) associés, ces manchons (2, 7) étant disposés dans le matériau tissé et/ou tricoté et/ou tressé.

6. Ligne de transmission suivant la revendication 5,
**caractérisée en ce que**
les manchons (2, 7) sont disposés dans des parties du matériau tissé et/ou tricoté et/ou tressé qui sont plus denses que d'autres parties du matériau tissé et/ou tricoté et/ou tressé.

7. Ligne de transmission suivant la revendication 5,
**caractérisée en ce que**
les éléments de la liaison à fiches sont droits.

8. Ligne de transmission suivant la revendication 5,
**caractérisée en ce que**
les éléments de la liaison à fiches sont coniques.

9. Ligne de transmission suivant les revendications 1 à 5,
**caractérisée en ce qu'**
un matériau élastomère est placé entre les fils métalliques du matériau tissé et/ou tricoté et/ou tressé.
